# FASCICULE DE BREVET EUROPEEN

(11) **EP 2 941 597 B1**
(45) Date de publication et mention de la délivrance du brevet: **27.02.2019**
(21) Numéro de dépôt: 13820791.5
(22) Date de dépôt: 28.11.2013
(51) Int. Cl.: F24F 5/00, B05B 17/06, F04D 29/70, F24F 6/12, F24F 7/007

(54) **DISPOSITIF DE RAFRAICHISSEMENT**
KÜHLUNGSVORRICHTUNG
REFRESHING DEVICE

(30) Priorité: 06.12.2012 FR 1261732
(43) Date de publication de la demande: 11.11.2015
(73) Titulaire: SEB S.A., 69130 Ecully (FR)
(72) Inventeur: ESCALETTES, Bertrand, F-27120 Menilles (FR); LE GALL, Sylvain, F-27200 Vernon (FR)
(74) Mandataire: Bourrières, Patrice
(86) Numéro de dépôt international: PCT/FR2013/052883
(87) Numéro de publication internationale: WO 2014/087078

(56) Documents cités:
- CN-U- 202 280 638
- FR-A1- 2 787 351
- GB-A- 2 468 328
- US-A1- 2010 270 397
- US-B1- 6 257 501
- US-B1- 6 786 701

## Description

La présente invention concerne un dispositif de rafraîchissement pour souffler de l'air humidifié et/ou rafraîchi.

Il est connu d'utiliser des dispositifs de rafraîchissement sous forme de bombe aérosol sous pression pour améliorer le confort des personnes en période de forte chaleur. Un tel dispositif comprend un bouton poussoir qui libère un mélange de gaz propulseur et d'eau. Ce mélange traverse une buse de sortie et est finalement propulsé vers l'extérieur sous l'effet de la pression en formant des gouttelettes d'eau. L'inconvénient d'un tel dispositif est qu'il a une durée très limitée du fait de la faible contenance de son réservoir. D'autre part, il ne permet pas d'atteindre une bonne maîtrise du mélange propulsé vers l'extérieur. Les dimensions des gouttelettes formant ce mélange sont très inégales, variables. Par ailleurs, de tels dispositifs sont non rechargeables et génèrent par conséquent des déchets. Enfin, les gouttes vaporisées ont tendance à mouiller l'utilisateur.

Le document FR2677437 décrit d'autre part un dispositif portable permettant de rafraîchir l'air ambiant localement dans une pièce de bâtiment, en soufflant de l'air rafraîchi par la vaporisation de gouttelettes d'eau disposées dans le flux d'air. Un tel dispositif est utile pour le traitement d'une pièce d'un bâtiment, mais nécessite un certain temps avant que son effet ne soit ressenti par un occupant du bâtiment. Il ne remplace pas l'utilisation d'un brumisateur sous forme de bombe aérosol tel que décrit ci-dessus mais a un effet complémentaire. Par ailleurs, ce type de dispositif génère de très fines gouttelettes d'eau qui s'évapore rapidement à la sortie du dispositif. Par ailleurs, le document CN202280638U décrit un dispositif de rafraîchissement comportant les caractéristiques du préambule de la revendication 1.

Il s'avère toutefois que les solutions existantes pour le rafraîchissement des personnes ne sont pas suffisantes et un objet général de l'invention est de proposer une solution améliorée de rafraîchissement des personnes.

A cet effet, l'invention repose sur un dispositif de rafraîchissement comprenant un ventilateur monté sur une base, la base comprenant un réservoir principal pour stocker un fluide, un mini-ventilateur et un nébuliseur pour mettre en mouvement le fluide nébulisé hors du réservoir principal vers un diffuseur positionné en aval du ventilateur, caractérisé en ce que le diffuseur comprend un orifice de forme sensiblement annulaire, la surface de sortie de l'orifice étant sensiblement perpendiculaire à la direction du flux d'air généré par le ventilateur.

Le diffuseur selon l'invention permet d'obtenir une large diffusion des gouttelettes de fluide et d'augmenter la surface d'exposition des personnes aux gouttelettes.

Selon d'autres variantes de réalisation :
- la périphérie extérieure de l'orifice comprend un déflecteur.
- Le diffuseur comprend une portion fermée en amont de l'orifice.
- La portion fermée comprend deux branches auxquelles est raccordé l'orifice.
- L'orifice est formé par un profilé dont la section transversale est sensiblement rectangulaire.
- Le ventilateur comprend une grille et l'orifice de sortie du diffuseur est monté sur la grille.
- Le ventilateur comprend une grille et l'orifice de sortie du diffuseur est intégré à la grille.
- La surface de sortie de l'orifice est sensiblement coaxiale au ventilateur.
- La périphérie de l'orifice de sortie comprend un dispositif anti-gouttes pour collecter les gouttes vers le réservoir principal.
- Le dispositif anti-gouttes comprend au moins une ouverture et une languette formée dans la périphérie du diffuseur.
- Le diamètre de l'orifice de sortie du diffuseur est compris entre ¼ et ¾ de la valeur du diamètre du ventilateur.

Ces objets, caractéristiques et avantages de la présente invention seront exposés en détail dans la description suivante d'un mode de réalisation particulier faite à titre non-limitatif en relation avec les figures jointes parmi lesquelles :
La figure 1 représente une vue en perspective d'un dispositif de rafraîchissement selon un mode de réalisation de l'invention.
La figure 2 représente une vue de côté d'un dispositif de rafraîchissement selon un mode de réalisation de l'invention.
La figure 3 représente une vue en perspective du diffuseur d'un dispositif de rafraîchissement selon un mode de réalisation de l'invention.
La figure 4 représente une vue de coté du diffuseur d'un dispositif de rafraîchissement selon un mode de réalisation de l'invention.

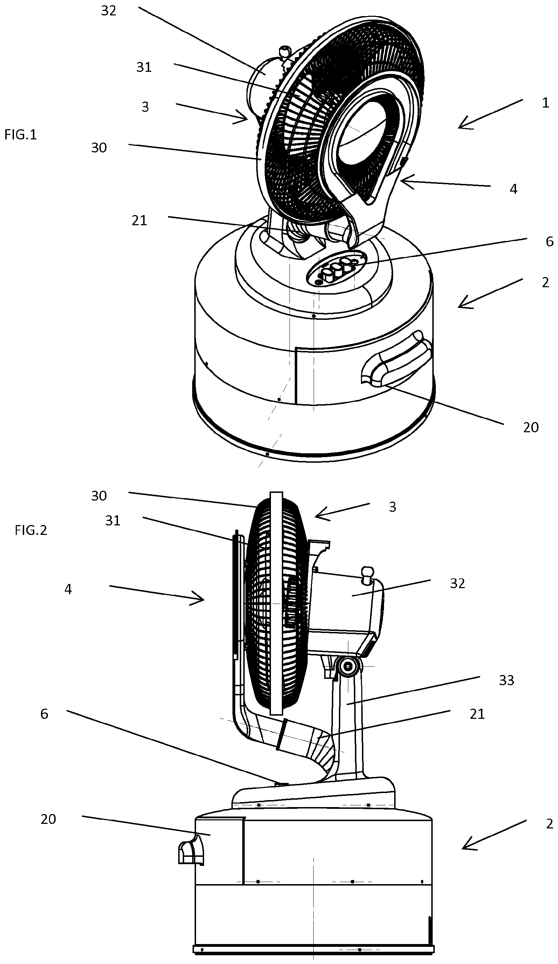

Les figures 1 et 2 illustrent un mode de réalisation d'un dispositif de rafraîchissement 1 portable selon l'invention. Ce dispositif de rafraîchissement 1 comprend une base 2 intégrant un réservoir principal 20 pour le stockage d'un liquide de rafraîchissement, de préférence de l'eau. Selon l'exemple de réalisation proposé la base 2 et le réservoir principal 20 ont une forme cylindrique. Toutefois, d'autres formes, par exemple plus allongées, pouvant former un réservoir de liquide suffisamment important (de l'ordre d'1l) peuvent être utilisées.

Un ventilateur 3 est fixé sur la surface de cette base 2, pour générer un flux d'air. D'autre part, un diffuseur 4 permet la sortie de gouttelettes provenant du réservoir principal de la base, juste en aval du ventilateur 3. Ces gouttelettes peuvent donc être ainsi projetées dans le flux d'air généré par le ventilateur 3 en entraînant le rafraîchissement de ce flux d'air.

Ce dispositif de rafraîchissement se présente ainsi comme un ventilateur brumisateur. Les gouttelettes générées sont de très petites tailles (de l'ordre de quelques µm) pour pouvoir s'évaporer rapidement dans le flux d'air. En effet, les fines gouttelettes en s'évaporant dans l'air ambiant vont contribuer à l'abaissement de la température sans provoquer de condensation de gouttelettes sur l'utilisateur.

Les gouttelettes sont générées par un nébuliseur en communication avec le réservoir principal. Le fluide nébulisé est ensuite mis en mouvement en dehors du réservoir principal 20 vers le diffuseur 4 grâce à un mini-ventilateur (non représenté) situé dans la base. Pour ce faire, le diffuseur 4 est connecté au réservoir principal 20 par l'intermédiaire du conduit 21. Le conduit 21 est par exemple un flexible.

Le ventilateur 3 comprend de façon connue en soi, une hélice 31 protégée par une grille 30. L'hélice 31 est entrainée en rotation par l'intermédiaire d'un moteur 32 monté à l'arrière du ventilateur. Ce moteur 32 peut être monté pivotant et/ou oscillant sur un pied 33 solidaire de la base 2.

Selon l'invention, le diffuseur 4 est solidaire du ventilateur 3 de sorte que, lors d'une utilisation normale, il n'y a pas de mouvement relatif entre le ventilateur 3 et le diffuseur 4.

Le dispositif de rafraichissement 1 comprend également un panneau de commande 6. Ce panneau de commande permet à l'utilisateur de mettre en marche le dispositif et de régler les différents paramètres de fonctionnent du dispositif tels que la vitesse de rotation de l'hélice, l'oscillation du ventilateur, la mise en marche du nébuliseur pour la génération de gouttelettes, l'intensité du nébuliseur etc....

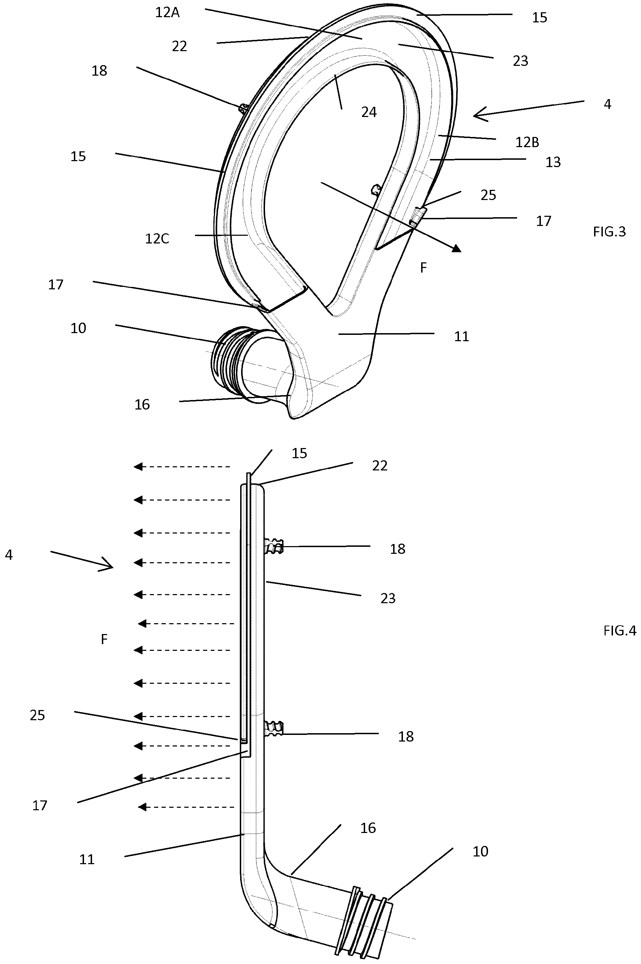

Le diffuseur 4 selon l'invention va à présent être décrit en détails en référence aux figures 3 et 4.

Selon l'invention, le diffuseur 4 comprend un orifice 13 de sortie des gouttelettes de forme sensiblement annulaire. Par ailleurs, la surface de sortie de l'orifice 13 est sensiblement perpendiculaire au flux d'air F généré par le ventilateur 3. La forme annulaire de l'orifice 13 de sortie du diffuseur 4 permet d'excentrer la zone de dispersion des gouttelettes et de disperser les gouttelettes de liquide sur une plus grande surface du ventilateur 3.

Selon la variante de réalisation représentée, la forme de l'orifice 13 de sortie est une portion 12a de couronne sur un arc angulaire d'environ 300°. Chaque extrémité de la portion de couronne se prolonge dans une direction sensiblement tangentielle à la portion de couronne, par une section rectiligne 12b, 12c. D'autres formes sont bien entendu possibles dans la mesure où celles-ci reprennent une forme sensiblement annulaire.

Le diffuseur 4 comprend en amont (dans le sens de sortie des gouttelettes) une portion fermée 11. Selon la variante de réalisation représentée, cette portion fermée 11 prolonge les sections rectilignes 12b, 12c de la couronne 12a. Cette portion fermée 11 forme ainsi un Y. La portion fermée 11 se prolonge par un conduit unique 16. L'extrémité libre 10 du conduit unique 16 est raccordée au conduit 21 du réservoir principal.

Selon la variante de réalisation, le diffuseur 4 est monté sur la grille avant du ventilateur par l'intermédiaire de plots 18 venant se clipser sur la grille du ventilateur.

Selon une autre variante non représentée le diffuseur est intégré directement dans la grille avant du ventilateur. En d'autres termes le diffuseur 4 et la grille avant du ventilateur forment une seule pièce.

Afin d'améliorer la dispersion des gouttelettes, l'orifice 13 de sortie est par exemple coaxial par rapport à l'hélice du ventilateur. Ainsi, la zone centrale du ventilateur dans laquelle la vitesse du flux d'air est la plus basse est évitée. L'orifice 13 de sortie est alors disposé dans une zone ou le flux d'air est plus important pour une meilleure dispersion des gouttelettes. Par ailleurs, le diamètre de l'orifice 13 de sortie est inférieur au diamètre du ventilateur. Ainsi, l'orifice 13 de sortie ne crée pas de perte de charge en vis-à-vis de la zone dans laquelle le flux d'air est le plus important (extrémité des pales de l'hélice). De plus, les gouttelettes expulsées par l'orifice de sortie ne sont pas recirculées dans le ventilateur. On évite ainsi un phénomène de condensation sur l'hélice ou sur la grille.

Selon une variante de réalisation, le diamètre de l'orifice 13 de sortie est compris entre ¼ et ¾ de la valeur du diamètre extérieur du ventilateur.

L'orifice 13 de sortie du diffuseur 4 est formé par un profilé ouvert vers l'aval du flux d'air du ventilateur. Le profilé comprend un fond 23, un bord extérieur 22 formant la périphérie extérieure de l'orifice et un bord intérieur 24. Selon la variante de réalisation représentée, la section transversale du profilé est sensiblement rectangulaire. Cette forme permet aux gouttelettes de s'élever jusqu'au sommet de l'orifice 13 de sortie ce qui permet d'obtenir un spectre de diffusion des gouttelettes plus large.

Par ailleurs, la profondeur du profilé (hauteur des bords 22, 24, extérieur et intérieur) est faible par rapport à la largeur du fond 23 du profilé. En effet, une profondeur trop importante du profilé entraine une augmentation de la condensation des gouttelettes. Toutefois, la profondeur ne doit pas être trop réduite pour éviter que le brouillard de gouttelettes ne sorte prématurément du diffuseur 4. Selon une variante de réalisation, la profondeur du profilé correspond à environ la moitié de la largeur du fond 23 du profilé.

Pour augmenter le spectre de dispersion des gouttelettes, le bord extérieur 22 de l'orifice 13 de sortie comprend un déflecteur 15. Le déflecteur 15 a pour but de créer une zone de dépression en aval du déflecteur 15 à proximité immédiate de la surface de sortie de l'orifice 13. La zone de dépression ainsi créée aspire les gouttelettes vers l'extérieur ce qui élargit la zone de dispersion des gouttelettes.

Selon la variante de réalisation représentée, le déflecteur 15 est une paroi en saillie de bord extérieur 22 de l'orifice 13. Le déflecteur 15 est sensiblement perpendiculaire au flux d'air du ventilateur. La hauteur de la paroi formant le déflecteur 15 n'excède pas quelques millimètres (environ 7mm) pour ne pas créer de perte de charge trop importante dans le flux d'air du ventilateur.

Afin d'éviter la formation de gouttes d'eau qui viendraient tomber sur la base ou sur le sol, le diffuseur 4 comprend un dispositif 17,25 anti-gouttes. Ce dispositif 17,25 permet de collecter les gouttes qui se forment par condensation sur le bord extérieur 22 du diffuseur 4. Le dispositif anti-gouttes comprend au moins une ouverture 25 et une languette 17 formée dans le bord extérieur 22 du diffuseur 4. La languette 17 est solidaire du bord inférieur de l'ouverture 25.

La ou les languettes 17 et ouvertures 25 sont positionnées dans la partie basse de l'orifice 13 afin de récolter toutes les gouttes. En effet, lorsqu'une goutte se forme à la surface du bord extérieur 22 de l'orifice 13, elle glisse par gravité sur le bord extérieur 22. Au niveau de la ou des ouvertures 25, les gouttes tombent sur la languette 17 correspondante puis s'évacuent vers le réservoir principal par la portion fermée 11 du diffuseur 4.

La présente invention n'est pas limitée aux exemples de réalisation décrits, mais englobe de nombreuses modifications dans le cadre des revendications. Ainsi, le ventilateur à hélice pourrait être remplacé par un ventilateur sans pale.

## Revendications

1. Dispositif de rafraîchissement (1) comprenant un ventilateur (3) monté sur une base (2), la base (2) comprenant un réservoir principal (20) pour stocker un fluide, un mini-ventilateur et un nébuliseur pour mettre en mouvement le fluide nébulisé hors du réservoir principal (20) vers un diffuseur (4) positionné en aval du ventilateur (3), **caractérisé en ce que** le diffuseur (4) comprend un orifice (13) de forme sensiblement annulaire, la surface de sortie de l'orifice (13) étant sensiblement perpendiculaire à la direction du flux (F) d'air généré par le ventilateur (3).

2. Dispositif de rafraîchissement (1) selon la revendication précédente, **caractérisé en ce que** la périphérie extérieure (22) de l'orifice (13) comprend un déflecteur (15).

3. Dispositif de rafraîchissement (1) selon l'une des revendications précédentes, **caractérisé en ce que** le diffuseur (4) comprend une portion fermée (11) en amont de l'orifice (13).

4. Dispositif de rafraîchissement (1) selon la revendication précédente, **caractérisé en ce que** la portion fermée (11) comprend deux branches auxquelles est raccordé l'orifice (13).

5. Dispositif de rafraîchissement (1) selon l'une des revendications précédentes, **caractérisé en ce que** l'orifice (13) est formé par un profilé dont la section transversale est sensiblement rectangulaire.

6. Dispositif de rafraîchissement (1) selon l'une des revendications précédentes, **caractérisé en ce que** le ventilateur (3) comprend une grille et l'orifice (13) de sortie du diffuseur (4) est monté sur la grille.

7. Dispositif de rafraîchissement (1) selon l'une des revendications 1 à 5, **caractérisé en ce que** le ventilateur (3) comprend une grille et l'orifice (13) de sortie du diffuseur (4) est intégré à la grille.

8. Dispositif de rafraîchissement (1) selon l'une des revendications précédentes **caractérisé en ce que** la surface de sortie de l'orifice (13) est sensiblement coaxiale au ventilateur (3).

9. Dispositif de rafraîchissement (1) selon l'une des revendications précédentes, **caractérisé en ce que** la périphérie de l'orifice (13) de sortie comprend un dispositif anti-gouttes (17, 25) pour collecter les gouttes vers le réservoir principal (20).

10. Dispositif de rafraîchissement (1) selon la revendication précédente, **caractérisé en ce que** le dispositif anti-gouttes comprend au moins une ouverture (25) et une languette (17) formée dans la périphérie (22) du diffuseur (4).

11. Dispositif de rafraîchissement selon l'une des revendications précédentes **caractérisé en ce que** le diamètre de l'orifice (13) de sortie du diffuseur (4) est compris entre ¼ et ¾ de la valeur du diamètre du ventilateur (3).

## Patentansprüche

1. Kühlvorrichtung (1), die einen Lüfter (3) umfasst, der auf einer Basis (2) montiert ist, wobei die Basis (2) einen Hauptbehälter (20) zum Speichern eines Fluids, einen Minilüfter und einen Zerstäuber zum Bewegen des zerstäubten Fluids aus dem Hauptbehälter (20) zu einem Diffusor (4) umfasst, der stromabwärts des Lüfters (3) angeordnet ist, **dadurch gekennzeichnet, dass** der Diffusor (4) eine Öffnung (13) mit einer im Wesentlichen ringförmigen Form umfasst, wobei die Auslassfläche der Öffnung (13) im Wesentlichen senkrecht zu der Richtung der Strömung (F) der Luft ist, die von dem Lüfter (3) erzeugt wird.

2. Kühlvorrichtung (1) nach dem vorhergehenden Anspruch, **dadurch gekennzeichnet, dass** der äußere Rand (22) der Öffnung (13) einen Abweiser (15) umfasst.

3. Kühlvorrichtung (1) nach einem der vorhergehenden Ansprüche, **dadurch gekennzeichnet, dass** der Diffusor (4) einen geschlossenen Abschnitt (11) stromaufwärts der Öffnung (13) umfasst.

4. Kühlvorrichtung (1) nach dem vorhergehenden Anspruch, **dadurch gekennzeichnet, dass** der geschlossene Abschnitt (11) zwei Zweige umfasst, mit denen die Öffnung (13) verbunden ist.

5. Kühlvorrichtung (1) nach einem der vorhergehenden Ansprüche, **dadurch gekennzeichnet, dass** die Öffnung (13) durch ein Profil gebildet ist, dessen Querschnitt im Wesentlichen rechteckig ist.

6. Kühlvorrichtung (1) nach einem der vorhergehenden Ansprüche, **dadurch gekennzeichnet, dass** der Lüfter (3) ein Gitter umfasst, und dass die Austrittsöffnung (13) des Diffusors (4) an dem Gitter montiert ist.

7. Kühlvorrichtung (1) nach einem der Ansprüche 1 bis 5, **dadurch gekennzeichnet, dass** der Lüfter (3) ein Gitter umfasst, und dass die Öffnung (13) des Diffusorauslasses (4) an dem Gitter integriert ist.

8. Kühlvorrichtung (1) nach einem der vorhergehenden Ansprüche, **dadurch gekennzeichnet, dass** die Austrittsfläche der Öffnung (13) im Wesentlichen koaxial zu dem Lüfter (3) ist.

9. Kühlvorrichtung (1) nach einem der vorhergehenden Ansprüche, **dadurch gekennzeichnet, dass** der Rand der Auslassöffnung (13) eine Tropfschutzvorrichtung (17, 25) zum Sammeln der Tropfen in Richtung des Hauptbehälters (20) umfasst.

10. Kühlvorrichtung (1) nach dem vorhergehenden Anspruch, **dadurch gekennzeichnet, dass** die Tropfschutzvorrichtung mindestens eine Öffnung (25) und eine Zunge (17) umfasst, die am Rand (22) des Diffusors (4) ausgebildet ist.

11. Kühlvorrichtung nach einem der vorhergehenden Ansprüche, **dadurch gekennzeichnet, dass** der Durchmesser der Auslassöffnung (13) des Diffusors (4) zwischen 1/4 und 3/4 des Wertes des Durchmessers des Ventilators (3) beträgt.

## Claims

1. Refreshing device (1) comprising a fan (3) mounted onto a base (2), the base (2) comprising a main container (20) for storing a fluid, a mini-fan and a nebuliser for setting the fluid nebulised outside of the main container (20) in motion towards a diffuser (4) positioned downstream of the fan (3), **characterised in that** the diffuser (4) comprises an opening (13) having a substantially annular shape, the outlet surface of the opening (13) being substantially perpendicular to the direction of airflow (F) generated by the fan (3).

2. Refreshing device (1) according to the previous claim, **characterised in that** the outer periphery (22) of the opening (13) comprises a deflector (15).

3. Refreshing device (1) according to one of the previous claims, **characterised in that** the diffuser (4) comprises a closed portion (11) upstream of the opening (13).

4. Refreshing device (1) according to the previous claim, **characterised in that** the closed portion (11) comprises two branches to which the opening (13) is connected.

5. Refreshing device (1) according to one of the previous claims, **characterised in that** the opening (13) is formed by a profile, the cross-section whereof is substantially rectangular.

6. Refreshing device (1) according to one of the previous claims, **characterised in that** the fan (3) comprises a grid and the outlet opening (13) of the diffuser (4) is mounted on the grid.

7. Refreshing device (1) according to one of claims 1 to 5, **characterised in that** the fan (3) comprises a grid and the outlet opening (13) of the diffuser (4) is integrated into the grid.

8. Refreshing device (1) according to one of the previous claims, **characterised in that** the outlet surface of the opening (13) is substantially coaxial to the fan (3).

9. Refreshing device (1) according to one of the previous claims, **characterised in that** the periphery of the outlet opening (13) comprises a drip-catching device (17, 25) for collecting the drips in the main container (20).

10. Refreshing device (1) according to the previous claim, **characterised in that** the drip-catching device comprises at least one opening (25) and a flap (17) formed in the periphery (22) of the diffuser (4).

11. Refreshing device according to one of the previous claims, **characterised in that** the diameter of the outlet opening (13) of the diffuser (4) is comprised in the range ¼ to ¾ of the value of the diameter of the fan (3).
